# EUROPÄISCHE PATENTSCHRIFT

(11) **EP 3 421 387 B1**
(45) Veröffentlichungstag und Bekanntmachung des Hinweises auf die Patenterteilung: **08.04.2020**
(21) Anmeldenummer: 18170544.3
(22) Anmeldetag: 03.05.2018
(51) Int. Cl.: B65D 65/12, A01F 15/07

(54) **HÜLLMATERIAL FÜR EINE BALLENPRESSE**
SHELL MATERIAL FOR A BALING PRESS
MATÉRIAU D'ENROBAGE POUR UNE PRESSE DE BALLE

(30) Priorität: 27.06.2017 DE 102017210848
(43) Veröffentlichungstag der Anmeldung: 02.01.2019
(73) Patentinhaber: Deere & Company, Moline, IL 61265 (US)
(72) Erfinder: Gresset, Pascal, 68163 Mannheim (DE); Perrotin, Frederic, 68163 Mannheim (DE)
(74) Vertreter: Reichert, Christian

(56) Entgegenhaltungen:
- EP-A1- 0 304 104
- US-A1- 2010 239 805
- US-A1- 2013 221 078
- US-A1- 2016 280 404

## Beschreibung

Die vorliegende Erfindung betrifft ein Hüllmaterial für eine Ballenpresse, insbesondere eine landwirtschaftliche Ballenpresse zur Bildung insbesondere rundzylindrischer Ballen, zur Umhüllung von vorzugsweise wenigstens im Wesentlichen der Mantelfläche eines Ballens.

Bekannte Umhüllungseinrichtungen werden an Rundballenpressen eingesetzt, um einen in einem Pressraum der Rundballenpresse gebildeten Ballen mit einem Hüllmaterial, beispielsweise einem Netz, einer Folie oder einem ähnlichen, gegebenenfalls auch semipermeablen, atmungsaktiven und/oder wasserabweisenden Material zu umhüllen, bevor dieser nach Abschluss der Umhüllung von der Rundballenpresse abgegeben und danach auf dem Untergrund abgelegt oder an eine weitere Einrichtung, beispielsweise eine Wickeleinrichtung, übergeben wird.

Derartige Rundballenpressen werden sowohl im landwirtschaftlichen als auch im industriellen Bereich eingesetzt. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in der Art von Stroh, Heu, Häckselgut etc.. Industrielle Pressen finden Verwendung bei der Verdichtung von Müll, Textilien oder anderen Stoffen bzw. bei deren Pressung zu Ballen. EP 0 304 104 A1 offenbart eine Ballenpresse und ein Hüllmaterial für eine Ballenpresse, wobei die Breite des Hüllmaterials breiter ist als die Presskammer. US 2013/0221078 A1 offenbart ein Verfahren und ein Material zum Umwickeln von Gegenständen unter Verwendung getrennter Umwicklungsabschnitte einer vorbestimmten Länge.

Bei einem Umhüllen eines Ballens mit Hüllmaterial kann es insbesondere bei ungünstigen Erntebedingungen vorkommen, dass das Hüllmaterial durch den Ballen zu Beginn eines Umhüllungsvorgangs nicht oder nicht richtig ergriffen wird und/oder sich das Hüllmaterial beispielsweise um Pressmittel einer Ballenpresse wickelt. Hierdurch kann es vorkommen, dass es zu Verstopfungen kommen kann und/oder der Ballen nicht oder nur unvollständig umhüllt wird, was durch eine Bedienungsperson häufig erst nach einem Abgeben des Ballens aus der Ballenpresse bemerkt wird.

Die der Erfindung zugrunde liegende Aufgabe wird darin gesehen, ein Hüllmaterial vorzusehen, durch welches die vorgenannten Nachteile überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Weist ein Hüllmaterial für eine Ballenpresse zur Umhüllung von wenigstens der Mantelfläche eines Ballens, wenigstens einen Mitnehmer auf, so kann dieser ein Ergreifen des Hüllmaterials durch den Ballen erleichtern und/oder verbessern, beispielsweise indem er mit dem Material, aus dem der Ballen gebildet wird, zusammenwirkt bzw. insbesondere von diesem ergriffen wird. Der eine Mitnehmer ist in der Art einer Ausnehmung ausgebildet, welche zumindest annähernd rund und/oder oval ausgebildet ist. Der Mitnehmer kann aber beispielsweise auch von einer Zufuhreinrichtung für das Hüllmaterial, beispielsweise einem an einer Umhüllungseinrichtung schwenkbar vorgesehenen Zufuhrhebel ergriffen werden oder mit einem solchen zusammenwirken. Auf diese Weise kann die Zufuhr des Hüllmaterials an einen Ballen und/oder ein Ergreifen des Hüllmaterials durch den Ballen verbessert bzw. unterstützt werden und/oder einem Umwickeln von Pressmitteln oder anderen Arbeitsmitteln oder Bauteilen der Ballenpresse entgegengewirkt bzw. vorgebeugt werden. Darüber hinaus kann der Mitnehmer die Position des Hüllmaterials und/oder eines Abschnitts des Hüllmaterials bezogen auf die Zufuhreinrichtung derart bestimmen, dass der Ballen bei jedem Umhüllungsvorgang von zumindest einer im Wesentlichen gleichen Menge an Hüllmaterial umwickelt wird bzw. die auf die Zufuhreinrichtung folgende Länge eines Abschnitts des Hüllmaterials für jeden Umhüllungsvorgang zumindest im Wesentlichen gleich ist. Bei der Ballenpresse handelt es sich insbesondere um eine landwirtschaftliche Ballenpresse zur Bildung rundzylindrischer Ballen. Die Ballenpresse kann aber auch im industriellen Bereich, beispielsweise zur Bildung von Ballen aus Papier, Müll, Stoff oder anderen Materialien eingesetzt werden. Es ist darüber hinaus denkbar, dass es sich um eine Presse zur Herstellung von Quaderballen handelt, wie sie sowohl im landwirtschaftlichen als auch im industriellen Bereich Verwendung findet.

Die Mitnehmer sind annähernd in Reihe quer zu einer Förderrichtung F über die Breite B des Hüllmaterials angeordnet. Dies begünstigt ein Ergreifen bzw. Fördern des Hüllmaterials über seine gesamte Breite.

Eine derartige Ausbildung kann in besonders einfacher und wirkungsvoller Art mit dem Ballen bzw. einem diesen bildenden Material zusammenwirken, indem beispielsweise Halme oder andere aus dem Ballen hervorkragende Materialien bzw. Materialabschnitte in die Ausnehmungen eingreifen.

Ist der wenigstens eine Mitnehmer in einem vorzugsweise bezogen auf eine Längserstreckung des Hüllmaterials zumindest im Wesentlichen selbsttätig abtrennbaren Abschnitt des Hüllmaterials angeordnet, so kann der Mitnehmer eine Zufuhr des/jedes Abschnitts und/oder ein Ergreifen des/jedes Abschnitts durch den Ballen verbessern bzw. unterstützen und/oder ein Umwickeln von Pressmitteln oder anderen Arbeitsmitteln oder Bauteilen der Ballenpresse durch Hüllmaterial bzw. einen Abschnitt des Hüllmaterials und damit einem Blockieren einer Umhüllungseinrichtung entgegenwirken bzw. vorbeugen. Insbesondere ist der wenigstens eine Mitnehmer in einem Anfangsbereich des Abschnitts angeordnet. Ist zwischen Abschnitten wenigstens ein Sollrissbereich vorgesehen ist, so kann sich ein um den Ballen gewickelter bzw. diesen umhüllender Abschnitt in einfacher Art und Weise von einem nacheilenden Abschnitt bzw. von dem übrigen, insbesondere auf einer Vorratsrolle angeordneten bzw. aufgewickelten, Hüllmaterial trennen, ohne dass hierzu der Einsatz einer Trenneinrichtung bzw. einer Messeranordnung zwingen notwendig ist.

Ist der Mitnehmer in einem Faltbereich des Hüllmaterials und insbesondere innerhalb von Seitenbereichen eines Faltbereichs angeordnet, so kann der Mitnehmer durch den Faltbereich bzw. durch die Seitenbereiche vor Umgebungseinflüssen und/oder einem insbesondere vorzeitigen Zusammenwirken, wie beispielsweise einem Ergriffenwerden durch den Ballen und/oder dessen Material, geschützt werden. Es kann vorgesehen sein, dass der Mitnehmer durch den Faltbereich bzw. die Seitenbereich erst freigegeben wird, wenn der Faltbereich bzw. die Seitenbereiche sich zumindest im Wesentlichen, vorzugsweise nach Abschluss eines Umhüllungsvorgangs, vollständig entfaltet haben.

Übergreift der Faltbereich einen jeweiligen Sollrissbereich, so kann einem vorzeitigen und/oder ungewollten Trennen der Abschnitte vorgebeugt und oder entgegengewirkt werden..

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
Fig. 1 eine schematische Seitenansicht einer landwirtschaftlichen Ballenpresse mit Pressmitteln und einer Umhüllungseinrichtung,
Fig. 2 eine vergrößerte Darstellung der Umhüllungseinrichtung mit einem auf einer Vorratsrolle aufgewickelten Hüllmaterial während der Umhüllung eines Ballens mit Hüllmaterial,
Fig. 3 eine Darstellung gemäß Figur 2 gegen Ende des Umhüllungsvorgangs, wobei der Ballen bereits vollständig mit Hüllmaterial umwickelt ist,
Fig. 4 eine Darstellung gemäß den Figuren 2 und 3, wobei sich ein Faltbereich des Hüllmaterials beginnt, sich zu entfalten,
Fig. 5 eine Darstellung gemäß Figur 4 bei fast vollständig entfaltetem Faltbereich und
Fig. 6 ein Darstellung eines in einem Zufuhrspalt angeordneten Anfangsbereich des Hüllmaterials.

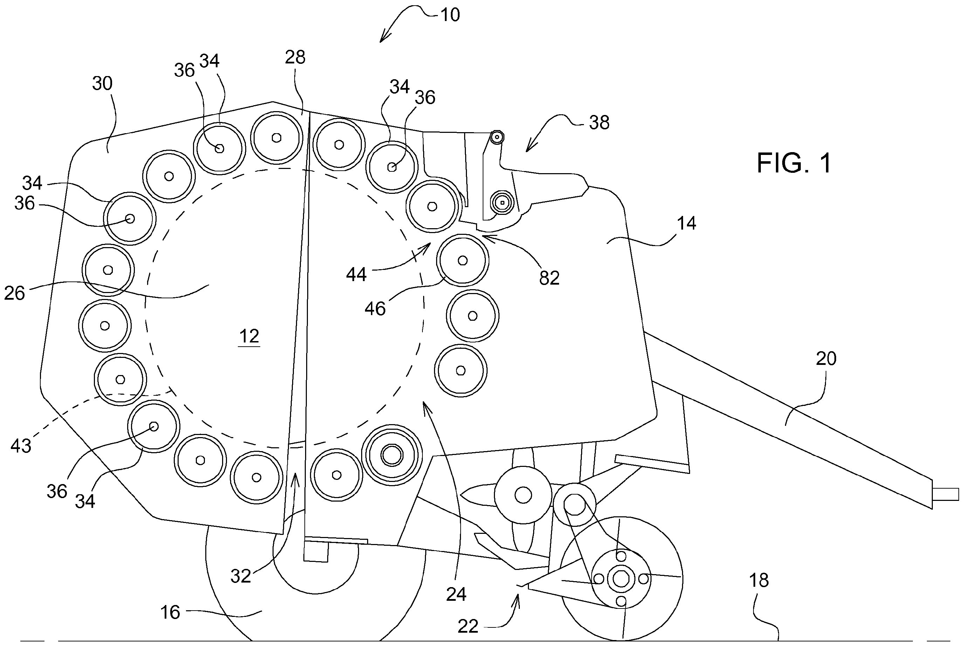

In der Figur 1 der Zeichnung wird eine schematisch dargestellte Ballenpresse 10, in der Art einer landwirtschaftlichen Ballenpresse zum Pressen eines rundzylindrischen Ballens 12 gezeigt, welche einen ersten Gehäuseteil 14 aufweist, der sich mittels Rädern 16 auf einem Untergrund 18 abstützt und die mittels einer Deichsel 20 an ein nicht gezeigtes Zugfahrzeug, z. B. einen Ackerschlepper, anschließbar ist.

An einer bezogen auf eine Vorwärtsfahrtrichtung vorderen, unteren Seite des ersten Gehäuseteils 14 befindet sich in bekannter Weise eine Aufnahmevorrichtung 22 zur Aufnahme und Zufuhr von Erntegut, die geschnittenes Erntegut durch einen Zufuhrkanal 24 in einen Pressraum 26 fördert, wobei der erste Gehäuseteil 14 einen vorderen Teil des Pressraum 26 umgibt. An dem rückwärtigen oberen Eckbereich des ersten Gehäuseteils 14 befindet sich ein Lager 28 für einen schwenkbaren zweiten Gehäuseteil 30, der einen hinteren Teil des Pressraums 26 umgibt. Der zweite Gehäuseteil 30 gibt im geöffneten Zustand eine Öffnung 32 frei, durch welche ein von der Ballenpresse 10 gepresster Ballen 12 abgesetzt bzw. entladen oder ausgeworfen werden kann. Der schwenkbare zweite Gehäuseteil 30 kann mittels Stellmotoren (nicht gezeigt) betätigt werden (geöffnet und geschlossen werden) und stellt somit eine Auslassklappe für einen in dem Pressraum 26 gepressten Ballen 12 dar.

Gemäß dem vorliegenden Ausführungsbeispiel ist der Pressraum 26 der Ballenpresse 10 größenunveränderlich ausgebildet und die Ballenpresse 10 weist eine Vielzahl zueinander parallel verlaufender Pressrollen 34 (exemplarisch wurden hier nur einige wenige Pressrollen 34 mit dem Bezugszeichen 34 versehen), deren Rollachsen 36 bei geschlossenem zweiten Gehäuseteil 24 auf einem Kreisbogen gelegen sind, und von denen wenigstens einige angetrieben sind. Die Pressrollen 34 dienen, neben einem Pressen und einer Formgebung, insbesondere auch einer Rotationserzeugung oder einer Rotationserhaltung des in dem Pressraum 20 angeordneten Rundballens 12. Die Ballenpresse 10 ist hier exemplarisch zur Darstellung der Öffnung 32 mit leicht geöffnetem hinterem Gehäuseteil 30 abgebildet. Während eines Pressvorgangs ist dieser jedoch geschlossen.

Ferner umfasst die Ballenpresse 10 eine Umhüllungseinrichtung 38, die mit einer Vorratsrolle 40 für Hüllmaterial 42 bestückt ist, die das Hüllmaterial 42 dem Pressraum 26 durch einen Zufuhrspalt 44 zuführt. Unmittelbar unterhalb des Zufuhrspalts 44 bzw. an diesen angrenzend ist eine Zufuhrrolle 46 vorgesehen, die abgesehen von ihrer Position, den übrigen Pressrollen 34 gleicht und mit diesen über einen nicht gezeigten Antrieb rotatorisch angetrieben werden kann.

Nachdem der eigentliche Ballenpressvorgang, also die Erntegutaufnahme und Bildung eines Ballens 12 durch die Pressrollen 34 abgeschlossen ist, wird eine Fahrt über den Untergrund 18 unterbrochen, da die Ballenpresse 10 mit dem Ballen 12 gefüllt ist und kein weiteres Erntegut mehr in den Pressraum 26 aufgenommen werden soll bzw. kann. Zu dieser Zeit wird auch die Umhüllungseinrichtung 38 aktiviert, ein sich dem Ballenpressvorgang anschließender Umhüllungsvorgang eingeleitet und das Hüllmaterial 42 von der Vorratsrolle 40 durch den Zufuhrspalt 44 in den Pressraum 26 und an den Ballen 12 herangeführt. Durch eine anhaltende Drehung des sich in dem Pressraum 26 befindlichen Ballens 12 wird das Hüllmaterial 42 derart um den Ballen 12 gewickelt, dass es eine Mantelfläche 43 des Ballens 12 umhüllt. Nachdem der Umhüllungsvorgang abgeschlossen ist, wird der Ballen 12 mittels Öffnen des in der Art einer Auslassklappe wirkenden zweiten Gehäuseteils 30 durch die Öffnung 32 über eine Entladerampe (nicht gezeigt) auf dem Untergrund 18 abgelegt. Sodann wird die Fahrt mit der Ballenpresse 10 wieder aufgenommen und ein neuer Ballenpressvorgang beginnt.

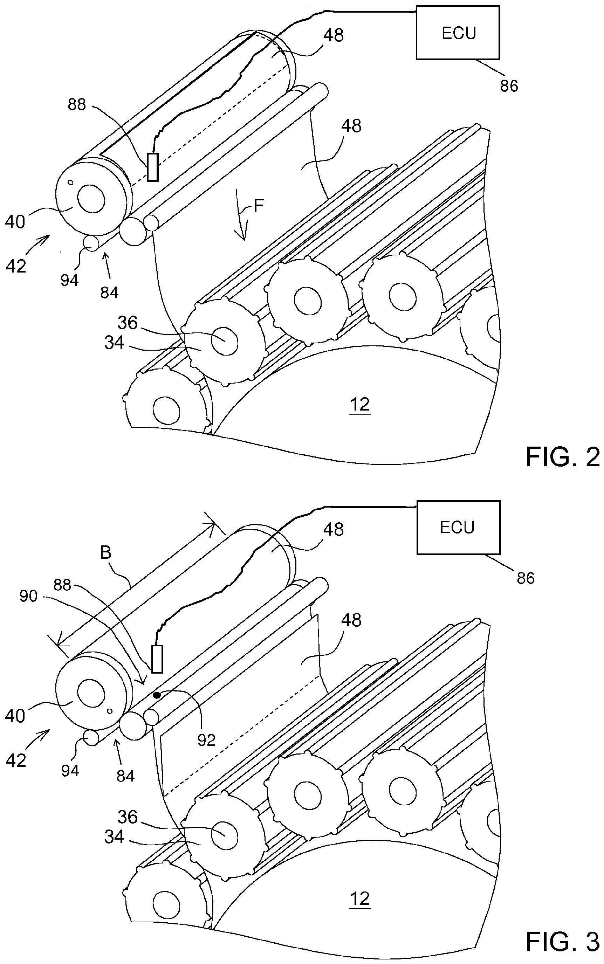

Es wird nun auch auf die Figur 2 bis 5 der Zeichnung Bezug genommen, in der die Umhüllungseinrichtung 38 und das Hüllmaterial 42 in einer vergrößerten Darstellung gezeigt werden. Die Umhüllungseinrichtung 38 ist gemäß dem vorliegenden Ausführungsbeispiel grundsätzlich in bekannter Art und Weise ausgebildet. Das Hüllmaterial 42 wird dem Zufuhrspalt 44 dabei derart zugeführt, dass es durch die angetriebene Zufuhrrolle 46 ergriffen und in Richtung des Ballen 12 gefördert wird. Gemäß dem vorliegenden Ausführungsbeispiel wird das Hüllmaterial 42 zumindest im Wesentlichen von oben an die Zufuhrrolle 46 herangeführt, wodurch es in einfacher Weise von dieser ergriffen und mitgenommen werden kann (siehe Figur 2).

Die Figuren 3 bis 5 zeigen die Umhüllungseinrichtung 38 und das Hüllmaterial 42 nun in aufeinanderfolgenden Phasen eines Umhüllungsvorgang. Gemäß Figur 3 ist der Ballen 12 nun fast vollständig mit Hüllmaterial 42 umhüllt und der Umhüllungsvorgang steht kurz vor dem Abschluss. Mit Blick auf die Vorratsrolle 40 wird deutlich, dass das Hüllmaterial 42 in Längsrichtung derart in Abschnitte 48 unterteilt ist, dass jeweils ein Abschnitt 48 für die Umhüllung eines Ballens 12 genutzt wird, wobei zwischen den Abschnitten 48 Sollrissbereiche 50 vorgesehen sind. Diese Sollrissbereiche 50 sind gemäß dem vorliegenden Ausführungsbeispiel in der Art von sich über die Breite B des Hüllmaterials 42 erstreckende Perforationslinien 52 ausgeführt.

Darüber hinaus weist das Hüllmaterial 42 Faltbereiche 54 und Haftbereiche 56 auf, wobei die Haftbereiche 56 jeweils zwei in der Art von Haft- bzw. Klebestreifen ausgebildete Haftkomponenten 58, 60 aufweisen. Diese Haftkomponenten 58, 60 sind wiederum mittels weiterer, nur andeutungsweise gezeigter Haftkomponenten 62, 64 an dem Hüllmaterial 42 angebracht.

Die Faltbereiche 54 weisen jeweils eine erste, eine zweite und eine dritte Faltkante 66, 68, 70 auf, welche bezogen auf die Förderrichtung F einander nacheilend vorgesehen sind. Die erste Faltkante 66 ist in einem Endbereich 71 eines voreilenden Abschnitts 48, die zweiten Faltkanten 68, 70 sind in einem nacheilenden Abschnitt 48 vorgesehen, wobei der Haftbereich 56 und der Sollrissbereich 50 zwischen der ersten Faltkante 66 und der zweiten Faltkante 68 vorgesehen sind und der Haftbereich 56 dem Sollrissbereich 50 voreilt. Die erste Faltkante 66 und die zweite Faltkante 68 bestimmen darüber hinaus zwischen sich einen ersten Seitenbereich 72 und die zweite Faltkante 68 und die dritte Faltkante 70 einen zweiten Seitenbereich 74.

Ist das Hüllmaterial 42 auf der Vorratsrolle 40 aufgewickelt, so sind die Faltbereiche 52 derart zusammengefaltet, dass der Sollrissbereich 54 sowie der Haftbereich 56 zwischen den Seitenbereiche 72, 74 angeordnet sind, nämlich derart, dass die Haftkomponenten 58, 60 aufeinander zu liegen kommen. Vorzugsweise ist die zweite Haftkomponente 60 als ein silikonartiges Material ausbildet, das an der ersten Haftkomponente 58 in gefaltetem Zustand des Faltbereichs 54 nur derart leicht anhaftet, dass der Faltbereich 54 in einem auf der Vorratsrolle 40 aufgewickelten Zustand von der ersten und zweiten Haftkomponente 58, 60 zusammengehalten wird.

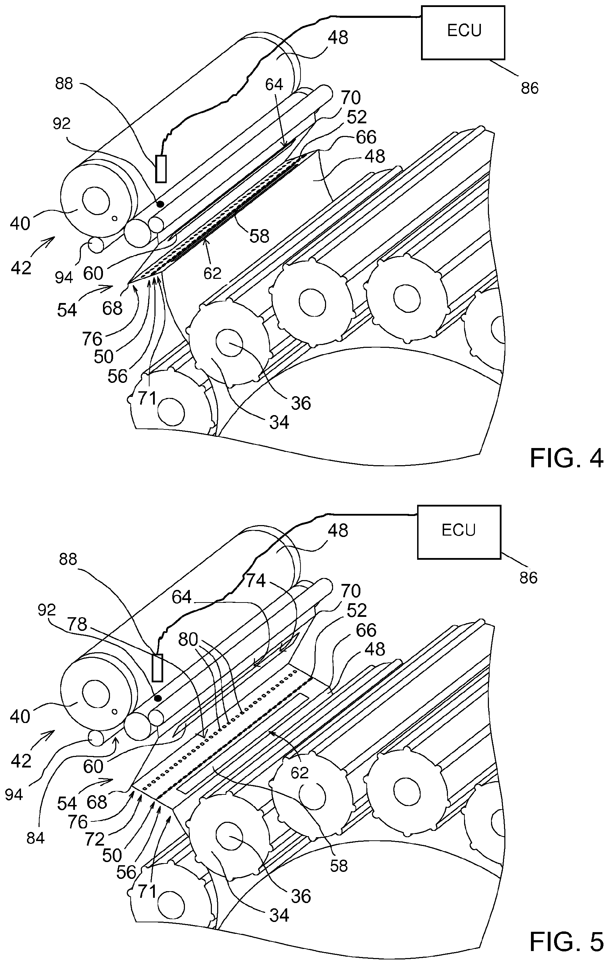

Ist der Ballen 12 vollständig mit Hüllmaterial 42 umwickelt, wie dies in den Figuren 4 und 5 dargestellt ist, so wirkt der rotierende Ballen 12 derart auf das Hüllmaterial 42, dass er auf dieses eine in Förderrichtung F wirkende Kraft auswirkt, welche eine Haftkraft zwischen der ersten und der zweiten Haftkomponente 58, 60 übersteigt und den Faltbereich 54 entfaltet. Die erste Haftkomponente 58 gelangt nun in Anlage mit dem den Ballen 12 umhüllenden Hüllmaterial 42 und geht mit diesem eine fest haftende Verbindung ein.

Die von dem rotierenden Ballen 12 aufgebrachte Kraft wirkt nun auf den Sollrissbereich 50 und trennt die Abschnitte 48 entlang der Perforationslinie 52 voneinander. Der Ballen 12 ist nun mit Hüllmaterial 42 umhüllt und kann aus dem Pressraum 26 abgegeben werden.

Das Hüllmaterial 42 weist darüber hinaus in einem Anfangsbereich 76 eines jeden nacheilenden Abschnitts eine Reihe von Mitnehmern 78 in der Art von im Wesentlichen runden Ausnehmungen 80 auf. Die Mitnehmer 78 erstrecken sich quer über die Breite B des Hüllmaterials 42 und grenzen beabstandet an den bezogen auf die Förderrichtung F voreilenden Sollrissbereich 50 an und sind vor der zweiten Faltkante 68 bzw. zwischen dem voreilenden Sollrissbereich 50 und der zweiten Faltkante 68 vorgesehen.

Durch die Mitnehmer 78 kann das Hüllmaterial 42 bzw. ein Anfangsbereich 72 eines jeden Abschnitts beispielsweise durch den Ballen 12 bzw. durch den Ballen 12 bildendes Material, wie im Falle eines landwirtschaftlichen Ballens beispielsweise durch Halme von Erntegut in der Art von Stroh oder Heu ergriffen werden.

Darüber hinaus kann die Reihe von Ausnehmungen 80 auch in der Art einer Sicherheitseinrichtung für den Fall dienen, dass keine Trennung entlang des Sollrissbereichs 50 erfolgt und/oder der den Ballen 12 umhüllende Abschnitt 48 zu kurz sein sollte. Alternativ kann nun eine Trennung entlang der in Reihe angeordneten Ausnehmungen 80 erfolgen und so einem Umwickeln des Ballens 12 mit einem zweiten Abschnitt 48 vorgebeugt werden.

Weist die Umhüllungseinrichtung 38 eine Zufuhreinrichtung 82 (in Figur 1 andeutungsweise gezeigt) für das Hüllmaterial 42, beispielsweise einen an der Umhüllungseinrichtung 38 schwenkbar vorgesehenen Zufuhrhebel auf, so kann der Zufuhrhebel mit dem Mitnehmer 78 zusammenwirken bzw. insbesondere in eine der oder die Ausnehmung(en) 80 eingreifen, um das Hüllmaterial 42 an die Zufuhrrolle 46 und/oder den Ballen 12 heranzuführen. Ein Zusammenwirken einer derartigen Zufuhreinrichtung 82 mit dem Mitnehmer 78 und insbesondere ein Eingreifen in eine der oder die Ausnehmung(en) 80 kann darüber hinaus die Position des Hüllmaterials 42 und/oder des von dem Zufuhrhebel ergriffenen Abschnitts 48 des Hüllmaterials 42 bezogen auf die Zufuhreinrichtung 82 und damit die Umhüllungseinrichtung 38 bzw. den Ballen 12 bestimmen. Hierdurch kann dazu beigetragen werden, dass das Hüllmaterial 42 und/oder insbesondere der Abschnitt 48 zur Umhüllung des Ballens 12, derart positioniert ist, dass die auf die Zufuhreinrichtung folgende Länge des Abschnitts 48 für jeden Umhüllungsvorgang zumindest im Wesentlichen gleich ist.

Es sei hier angemerkt, dass derartige Mitnehmer 78 auch an konventionellen bzw. bekannten oder an von dem zuvor beschriebenen Hüllmaterial abweichend ausgebildeten Hüllmaterialien, insbesondere an Folien, vorgesehen sein können, bzw. ein zuvor beschriebenes Hüllmaterial 42 nicht notwendigerweise mit derartigen Mitnehmern 78 versehen werden muss.

Es wird nun insbesondere auf die Figuren 2 bis 6 Bezug genommen, in denen eine Bremseinrichtung 84 für ein Hüllmaterial 42 gezeigt wird. Die im folgenden nun genauer beschriebene Bremseinrichtung 84 kann an einer zuvor beschriebenen Umhüllungseinrichtung aber auch an einer konventionellen Umhüllungseinrichtung bzw. Ballenpresse und/oder in Verbindung mit einem zuvor beschriebenen wie auch einem konventionellen Hüllmaterial, beispielsweise einem Netz oder einer Folie, eingesetzt werden.

Gemäß dem vorliegenden Ausführungsbeispiel ist die Bremseinrichtung 84 wirksam mit einer Steuer- oder Regeleinrichtung 86 der Ballenpresse 10 verbunden und weist einen Sensor 88, in der Art eines optischen Sensors 88, auf, der aufnehmen kann, ob sich eine in einem Randbereich 90 des Hüllmaterials 42 vorgesehene Markierung 92 in einem Erfassungsbereich des Sensors 88 befindet.

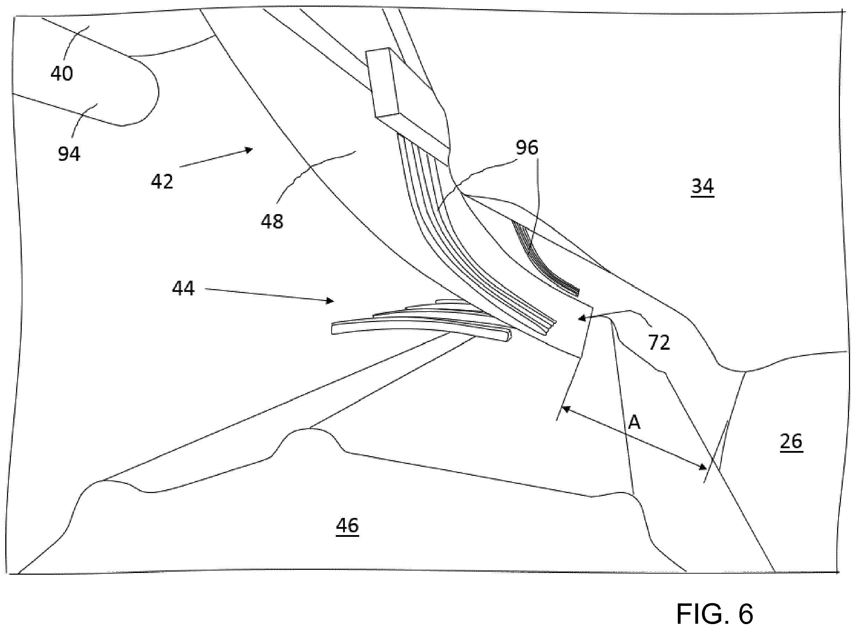

Erkennt der Sensor 88, dass eine Markierung 92 in seinem Erfassungsbereich vorhanden ist, überträgt er diese Information an die Steuer- oder Regeleinrichtung 86, die entsprechend die Bremseinrichtung 84 in der Art aktiviert, dass ein Bremsmittel 94 der Bremseinrichtung 84 an das Hüllmaterial 42 angelegt wird, um dieses abzubremsen. Die Markierung 92 ist auf dem Hüllmaterial 42 derart angeordnet, dass sie der Bremseinrichtung 84 anzeigt, das Hüllmaterial 42 abzubremsen, wenn der Anfangsbereich 72 eines dem einen Ballen 10 umhüllenden Abschnitt 48 nacheilenden Abschnitts 48 bzw. sein nach einem Abtrennen des den Ballen 10 umhüllenden Abschnitts 48 entlang des Sollrissbereichs 50 nun freien Endes eine vorbestimmte Position einnimmt (siehe Figur 6). Insbesondere wird der Abschnitt 48 derart abgebremst, dass sein Anfangsbereich 72 bzw. sein freies Ende derart in dem Zufuhrspalt 44 angeordnet ist, dass ein Abstand A zwischen dem Anfangsbereich 72 und dem Pressraum 26 zu Beginn eines jeden Umhüllungsvorgangs zumindest im Wesentlichen gleich ist. Gemäß der Darstellung in Figur 6 wird das Hüllmaterial 42 bzw. der Anfangsbereich 72 darüber hinaus durch ein für die gewünschte Wirkung der Bremseinrichtung nicht notwendiges Leitmittel 96 in Anlage mit der Zufuhrrolle 44 gehalten.

Auf diese Weise trägt die Bremseinrichtung 84 dazu bei, dass jeder Ballen 10 mit einer zumindest im Wesentlichen gleichen Menge an Hüllmaterial 42 bzw. bei einem zuvor beschriebenen, in Abschnitte 48 unterteilten Hüllmaterial 42 bzw. einem Hüllmaterial 42 mit Sollrissbereichen 50 mit genau einem Abschnitt 48 umhüllt wird bzw. der jeweilige Abschnitt 48 zur Umhüllung eines Ballens passend positioniert wird.

Eine Bremseinrichtung 84 kann alternativ beispielsweise auch zeitlich getaktet gesteuert werden. Es ist aber auch denkbar, dass Sensormittel 88 vorgesehen sind, die beispielsweise die Länge des bereits von der Vorratsrolle 40 abgezogenen Hüllmaterials 42 ermitteln. Die Bremseineinrichtung 84 kann aber auch eine nicht gezeigte Hebeleinrichtung aufweisen, die mit eine Markierung 92 in der Art einer Aussparung zusammenwirkt, in die ein mechanisches Bremselement in der Art eines gelenkig an der Umhüllungseinrichtung 38 vorgesehenen Hebelelements eingreifen kann, um das Hüllmaterial 42 abzubremsen. Nach erfolgter Trennung des Hüllmaterials 42 kann ein derartiges Bremselement beispielsweise zurück in eine Ausgangsstellung verschwenken bzw. verschwenkt werden, in der es nicht auf das Hüllmaterial 42 einwirkt. Eine derartige Bremseinrichtung 84 muss nicht notwendigerweise durch eine Steuer- oder Regeleinrichtung gesteuert bzw. geregelt werden. Es kann aber auch vorgesehen sein, dass ein nicht gezeigter Antrieb, beispielsweise ein Antrieb der Vorratsrolle 40, entsprechend abgebremst bzw. deaktiviert wird.

Das Trennen der Abschnitte 48 entlang des Sollrissbereichs 50 kann ohne Zuhilfenahme weiterer Hilfsmittel, insbesondere ohne den Einsatz einer Trenneinrichtung bzw. einer Messeranordnung erfolgen. Darüber hinaus oder auch alternativ kann durch die gezeigte Bremseinrichtung 84 zum Abschluss eines Umhüllungsvorgangs aber eine auf den Sollrissbereich 50 wirkende Kraft erhöht bzw. eine zusätzliche Kraft aufgebracht werden.

## Patentansprüche

1. Hüllmaterial (38) für eine Ballenpresse (10) zur Umhüllung von wenigstens der Mantelfläche (43) eines Ballens (12), wobei das Hüllmaterial (42) mehrere Mitnehmer (78) aufweist, **dadurch gekennzeichnet, dass** die Mitnehmer (38) annähernd in Reihe quer zu einer Förderrichtung F über die Breite B des Hüllmaterials (38) angeordnet sind, und die Mitnehmer in der Art einer Ausnehmung ausgebildet sind, wobei die Ausnehmung zumindest annähernd rund und/oder oval ausgebildet ist.

2. Hüllmaterial nach einem der vorherigen Ansprüche, **dadurch gekennzeichnet, dass** der wenigstens eine Mitnehmer insbesondere in einem Anfangsbereich eines vorzugsweise bezogen auf eine Längserstreckung des Hüllmaterials zumindest im Wesentlichen selbsttätig abtrennbaren Abschnitts (48) des Hüllmaterials angeordnet ist, wobei vorzugsweise zwischen Abschnitten (48) wenigstens ein Sollrissbereich (50) vorgesehen ist.

3. Hüllmaterial nach einem oder mehreren der vorherigen Ansprüchen, **dadurch gekennzeichnet, dass** der Mitnehmer (78) in einem Faltbereich (54) des Hüllmaterials (38) und insbesondere innerhalb von Seitenbereichen (72, 74) des Faltbereichs (54) angeordnet ist.

4. Hüllmaterial nach Anspruch 3, **dadurch gekennzeichnet, dass** der Faltbereich (54) einen jeweiligen Sollrissbereich (50) übergreift.

## Claims

1. Enveloping material (38) for a baler (10) for enveloping at least the lateral surface (43) of a bale (12), wherein the enveloping material (42) has a plurality of entrainers (78), **characterized in that** the entrainers (38) are arranged approximately in a row transversely to a delivery direction F across the width B of the enveloping material (38), and the entrainers are configured in the form of a cutout, wherein the cutout is configured at least approximately in a round and/or oval manner.

2. Enveloping material according to one of the preceding claims, **characterized in that** the at least one entrainer is arranged in particular in a starting region of a portion (48) of the enveloping material that is at least substantially automatically separable preferably with regard to a longitudinal extent of the enveloping material, at least one predetermined tearing region (50) preferably being provided between portions (48).

3. Enveloping material according to one or more of the preceding claims, **characterized in that** the entrainer (78) is arranged in a folding region (54) of the enveloping material (38) and in particular within lateral regions (72, 74) of the folding region (54).

4. Enveloping material according to Claim 3, **characterized in that** the folding region (54) engages over each particular predetermined tearing region (50).

## Revendications

1. Matériau d'enrobage (38) pour une presse à balles (10) pour enrober au moins la surface d'enveloppe (43) d'une balle (12), le matériau d'enrobage (42) présentant plusieurs dispositifs d'entraînement (78), **caractérisé en ce que** les dispositifs d'entraînement (38) sont disposés approximativement en rangées transversalement à une direction d'avance F sur la largeur B du matériau d'enrobage (38), et les dispositifs d'entraînement sont réalisés à la manière d'un évidement, l'évidement étant réalisé de manière au moins approximativement ronde et/ou ovale.

2. Matériau d'enrobage selon l'une quelconque des revendications précédentes, **caractérisé en ce que** l'au moins un dispositif d'entraînement est disposé notamment dans une région initiale d'une portion (48) du matériau d'enrobage pouvant être séparée au moins essentiellement automatiquement de préférence par rapport à une étendue longitudinale du matériau d'enrobage, au moins une région prévue pour être déchirée (50) étant prévue de préférence entre les portions (48).

3. Matériau d'enrobage selon l'une quelconque ou plusieurs des revendications précédentes, **caractérisé en ce que** le dispositif d'entraînement (78) est disposé dans une région de pli (54) du matériau d'enrobage (38) et notamment à l'intérieur de régions latérales (72, 74) de la région de pli (54) .

4. Matériau d'enrobage selon la revendication 3, **caractérisé en ce que** la région de pli (54) vient en prise par le dessus avec une région respective prévue pour être déchirée (50).
